# EUROPÄISCHE PATENTANMELDUNG

(11) **EP 1 894 649 A1**
(43) Veröffentlichungstag der Anmeldung: **05.03.2008**
(21) Anmeldenummer: 06405375.4
(22) Anmeldetag: 01.09.2006
(51) Int. Cl.: B22D 41/22, B22D 41/34, B25J 9/00

(54) **Anlage zur Wartung eines am Ausguss eines Behälters für Metallschmelze montierten Schiebeverschlusses**

(71) Anmelder: Stopinc Aktiengesellschaft, 6311 Hünenberg (CH)
(72) Erfinder: Truttmann, Urs, CH-6340 Baar (CH)
(74) Vertreter: Luchs, Willi

(57) **Zusammenfassung**

Eine Anlage dient zur Wartung eines am Ausguss eines Behälters (10) für Metallschmelze montierten Schiebeverschlusses (20). Diese Anlage ist mit mindestens einem Werkzeugmagazin (65, 66), mit mindestens einem Ersatzteilmagazin (67) sowie mit Mitteln (30) zum Öffnen und Schliessen des Schiebeverschlusses (20) versehen. Als Neuerung ist ein mit einem automatischen Greifwechselsystem (61) versehener und mit einer Steuerung (75) wirkverbundener Roboter (60) vorhanden, der im Stande ist, als erstes die exakte Position des Behälters (10) bzw. des Schiebeverschlusses (20) selbsttätig zu erkennen. Danach kann er die Mittel (30) zum Öffnen und Schliessen des Schiebeverschlusses (20) betätigen, und je nach Zustand der einzelnen allenfalls zu ersetzenden Komponenten aus den ihn umgebenden Magazinen (65, 66, 67) Werkzeuge bzw. Ersatzteile ergreifen und Reinigungsarbeiten, Komponentenausbau sowie deren Ersatz oder Wiedereinbau durchzuführen. Damit kann Personal eingespart werden und hierbei die Arbeitssicherheit erhöht werden.

## Beschreibung

Die Erfindung betrifft eine Anlage zur Wartung eines am Ausguss eines Behälters für Metallschmelze montierten Schiebeverschlusses gemäss dem Oberbegriff des Anspruches 1.

Schiebeverschlüsse am Ausguss von Behältern für Metallschmelze sind in vielfältigen Ausgestaltungen bekannt, wobei es sich grundsätzlich um Schiebeverschlüsse mit einer linear verstellbaren Schiebereinheit (vgl. z.B. EP-A-0 875 320) oder um Drehschiebeverschlüsse (vgl. z.B. CH-A-649 149) handeln kann. Bekanntlich sind die feuerfesten Bestandteile dieser Schiebeverschlüsse, insbesondere die Verschlussplatten, aber auch ihre Ausgusshülsen sowie die Hülsen am Behälterauslass, einem starken Verschleiss ausgesetzt und müssen von Zeit zu Zeit kontrolliert und allenfalls ausgewechselt werden. Der entleerte Behälter, z.B. eine sogenannte Pfanne, wird samt dem Schiebeverschluss an eine Wartungsstelle, einen sogenannten Pfannenplatz gebracht, wo die waagerecht gestellte Pfanne gereinigt, der Schiebeverschluss geöffnet und die einzelnen allenfalls zu ersetzenden Komponenten mittels entsprechender Werkzeuge ausgebaut, Reinigungsarbeiten durchgeführt und dann die Komponenten bzw. deren Ersatzteile wieder eingebaut werden. Im Fachjargon wird diese Wartung auch als eine Zustellung bezeichnet. Diese Wartungs- bzw. Zustellungsarbeiten werden manuell ausgeführt. Die Art, wie der Schiebeverschluss geöffnet wird sowie die Mittel zum Öffnen und Schliessen des Schiebeverschlusses hängen von der Bauart des jeweiligen Verschlusses ab.

Ein mit einer linear verstellbaren Schiebereinheit versehener Schiebeverschluss wird - wie beispielsweise in der EP-A-0 875 320 beschrieben - mittels einer an den Schiebeverschluss montierbaren Kolben/Zylindereinheit betätigt, um den Giesskanal zu öffnen oder zu schliessen. Im Gegensatz zum Schiebeverschluss ist die Kolben/Zylindereinheit nicht ständig an der Pfanne angebracht, sondern sie verbleibt - vom Schieberverschluss wieder demontiert - an der Giessanlage oder am Pfannenplatz, wo das Öffnen und Schliessen des Giesskanals erfolgen soll. Bei Montage am Schiebeverschluss wird der Zylinder in eine Halterung am Schiebergehäuse eingeführt und in dieser ortsfest gehalten, während die Antriebsstange mit der Schiebereinheit gekoppelt wird. Der Hub der Schiebereinheit zum Öffnen und Schliessen des Giesskanals ist durch einen Hubbegrenzungsbolzen begrenzt. Sollen die Verschlussplatten ausgewechselt werden, so wird der Hubbegrenzungsbolzen herausgenommen und die Schiebereinheit über die eine Grenzstellung hinaus verschoben, wonach sie vom Schiebergehäuse gelöst bzw. gegenüber diesem ausgeschwenkt wird und die Verschlussplatten zugänglich gemacht werden.

Der vorliegenden Erfindung liegt die Aufgabe zugrunde, eine Anlage der eingangs genannten Art zu schaffen, mit der die Wartungs- bzw. Zustellungsarbeiten erheblich erleichtert werden.

Diese Aufgabe wird erfindungsgemäss durch eine Anlage mit den Merkmalen des Anspruches 1 gelöst.

Weitere bevorzugte Ausgestaltungen der erfindungsgemässen Anlage bilden den Gegenstand der abhängigen Ansprüche.

Mit dieser erfindungsgemässen Anlage ergeben sich Vorteile, zum einen dass zum Durchführen der Wartungs- bzw. Zustellungsarbeiten weniger Personal gebraucht wird, was sich kostensenkend auswirkt, wobei auch sichergestellt wird, dass die Arbeiten fehlerfrei ablaufen. Ausserdem ist auch eine höhere Arbeitssicherheit als bei den konventionellen Zustellungen gegeben, denn die Bediener müssen nicht mehr unmittelbar vor der heissen Pfanne Arbeiten verrichten.

Die Erfindung wird nachfolgend anhand der Zeichnung näher erläutert.
Es zeigen:
- Fig. 1: eine erfindungsgemässe Anlage zur Wartung eines Schiebeverschlusses; und
- Fig. 2: ein Ausführungsbeispiel eines Schiebeverschlusses am Ausguss eines teilweise dargestellten Behälters für Metallschmelze im Längsschnitt.

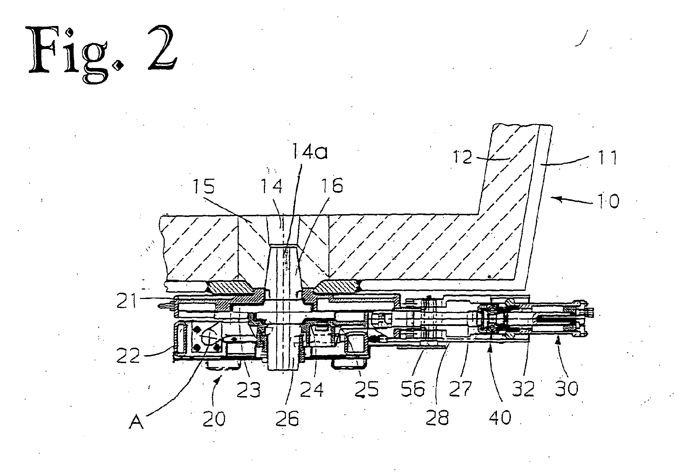

Fig. 2 zeigt einen Teil eines Behälters 10 für Metallschmelze, einer sogenannten Pfanne, an dessen Ausguss ein Schiebeverschluss 20 montiert ist. Der Behälter 10 weist einen äusseren Stahlmantel 11, eine in diesem eingebettete feuerfeste Auskleidung 12 sowie einen Auslass 14 auf, welcher von einem feuerfesten Lochstein 15 und einer in diesen eingesetzten feuerfesten Hülse 16 gebildet ist.

Beim Schiebeverschluss 20 kann es sich beispielsweise um den aus der EP-A-0 875 320 bekannten und auch in der EP-B-0 277 146 ausführlich beschrieben Schiebeverschluss handeln. Dieser umfasst einen oberen Gehäuseteil 21 mit einer darin eingesetzten feuerfesten Verschlussplatte 23 sowie einen Gehäuserahmen 22 mit einer darin lösbar verspannten Schiebereinheit 25, in der eine feuerfeste Schieberplatte 24 eingesetzt ist, an welche sich eine feuerfeste Ausgusshülse 26 anschliesst. Durch Verschieben der Schiebereinheit 25 kann der Auslass 14 bzw. ein Giesskanal 14a aus der in Fig. 2 veranschaulichten Öffnungsstellung in eine Drossel- oder Schliessstellung (und umgekehrt) gebracht werden.

Die lineare Verstellung der Schiebereinheit 25 erfolgt mittels einer Kolben/Zylindereinheit 30, die in einer am oberen Gehäuseteil 21 angeflanschten Halterung 28 wegnehmbar angeordnet ist, d.h. die Kolben/Zylindereinheit 30 verbleibt im Gegensatz zum Schiebeverschluss 20 nicht ständig am Behälter 10, sondern wird auf der Giessbühne oder aber auch auf der Wartungsstelle, dem sogenannten Pfannenplatz, belassen. In die Halterung 28 wird der Zylinderteil der Kolben/Zylindereinheit 30 eingeschoben, eine Antriebsstange 32 derselben wird danach mit einer Schubstange 27 der Schiebereinheit 25 über eine Kupplung 40 angekoppelt.

Der Hub der Schiebereinheit 25 für die Verstellung aus der dargestellten Öffnungsstellung in die Schliessstellung ist durch einen Hubbegrenzungsbolzen 56 beschränkt, der wegnehmbar in die Halterung 28 eingesetzt ist und eine Längsöffnung in der Schubstange 27 durchquert. Der Hubbegrenzungsbolzen 56 kann aus dem Eingriff mit der Längsöffnung herausgenommen werden, wenn beispielsweise ein Verschlussplattenwechsel stattfinden soll. Dann kann die Schiebereinheit 25 über die Schliessstellung hinaus auf entsprechenden Führungsbahnen verschoben und vom Rahmen 22 und vom oberen Gehäuseteil 21 gelöst bzw. diesen gegenüber ausgeschwenkt werden.

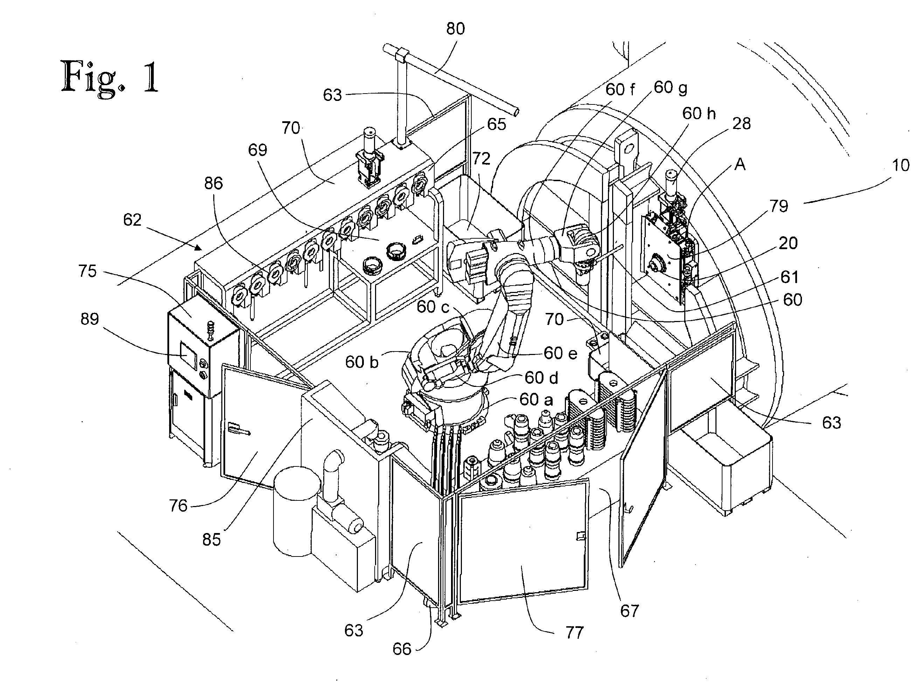

Bei der in Fig. 2 dargestellten Ausführungsform wird die Schiebereinheit 25 um eine horizontale Achse A nach unten ausgeschwenkt, es könnte aber auch seitliches Ausschwenken vorgesehen sein. Am bereits erwähnten Pfannenplatz, wo die Wartung des Behälters 10 sowie des Schiebeverschlusses 20 stattfindet, wird der Behälter bzw. die Pfanne 10 in waagerechte Stellung gebracht und die Verschieberichtung der Schiebereinheit 25 verläuft vertikal, so dass die Schiebereinheit 25 bei der Ausführung nach Fig. 1 horizontal geschwenkt werden kann, was mit wenig Kraftaufwand verbunden ist.

Am Pfannenplatz werden jeweils insbesondere die einem hohen Verschleiss ausgesetzten feuerfesten Verschlussplatten 23, 24, die feuerfeste Ausgusshülse 26 sowie die feuerfeste Hülse 16 für den Behälterauslass 14 kontrolliert und allenfalls ersetzt. Ersetzt werden aber auch diverse andere Teile wie Keramikringe, Durchbruchsicherungen, feuerfeste Spülkegel etc. Bis jetzt war es üblich, den Komponentenausbau, die Wartungsarbeiten und den Wiedereinbau oder Ersatz von Komponenten manuell durchzuführen.

Erfindungsgemäss ist nach Fig. 1 für den Pfannenplatz eine Anlage zur Wartung des Behälterausgusses bzw. des am Ausguss des Behälters 10 montierten Schiebeverschlusses 20 vorgesehen, deren ein Ausführungsbeispiel in Fig. 2 angedeutet ist. Die Anlage umfasst einen mit einem automatischen Greifwechselsystem 61 versehenen Roboter 60, der in einer durch Schutzabschrankungen 63 begrenzten Roboterzelle 62 angeordnet ist, umgeben von mindestens einem Werkzeugmagazin 65, 66, mindestens einem Ersatzteilmagazin 67, diversen Ablagen und/oder Zwischenablagen 69, 70, Abfallbehältern 71, 72 etc., wobei auch Anschlussstellen für Strom, Druckluft, Sauerstoff, Hydrauliköl etc. vorhanden sind. Der Roboter ist mit einer Steuerung 75 wirkverbunden, die zusammen mit einem Operatorpanel 89 in einem separaten Schalterschrank ausserhalb der Roboterzelle 62 eingebaut ist.

Die Roboterzelle 62 kann über eine Tür 76 betreten werden, die vor und während des Robotereinsatzes verriegelbar ist. Über eine weitere Tür 77 werden Ersatzteile nachgeliefert.

Der Roboter 60 besteht im wesentlichen aus einem Sockel 60a, einem auf diesem um eine vertikale Achse drehbaren Querarm 60b mit einer Kolben/ Zylindereinheit 60d und einem Schwenklager 60c, einem an letzterem schwenkbar gelagerten Längsarm 60e, einem weiteren Zusatzarm 60f, der am Ende des Längsarmes 60e drehbar gehalten ist, einem am Zusatzarm 60f gelenkig gehaltenen Bügel 60g und dem in diesem schwenkbaren Greifwechselsystem 61. Die seitlich des Querarmes 60b angeordnete Kolben/ Zylindereinheit 60d 60d dient zur Verstellung des Längsarmes 60e. Ansonsten weist der Roboter 60 weitere Motoren und Positionsmessgeräte auf, die nicht näher dargestellt sind.

Der Roboter 60 ist durch seine Ausbildung im Stande, die exakte Position des Behälters 10 bzw. des Schiebeverschlusses 20 selbsttätig zu erkennen, wozu eine Kamera an das automatische Greifwechselsystem 61 koppelbar ist. Liegt eine Pfanne 10 auf dem Pfannenplatz, startet die Bedienungsperson den Zyklus. Der Roboter 60 koppelt die Kamera an, die die Pfannenlage und Pfannennummer erkennt und über die ein Signal zum Öffnen des Hitzeschildes 79 abgegeben wird. Danach wird die Kamera nah vor dem Schieber positioniert und die exakte Schieberlage erkannt und ermittelt. Die Kamera wird nach der Positionserkennung vom Roboter 60 in entsprechendes Werkzeugmagazin zurückgelegt.

Die Roboterzelle 62 ist mit Mitteln zum Öffnen und Schliessen des Schiebeverschlusses 20 ausgerüstet, beispielsweise mit der bereits erwähnten Kolben/Zylindereinheit 30, die in einer als eine Halterung ausgebildeten Ablage 70 abgelegt ist. Der Roboter 60 kann die Kolben/Zylindereinheit 30 mit einem Greifer von der Ablage 70 entnehmen und in die Halterung 28 einführen und mit der Schiebereinheit 25 koppeln. Mittels des Roboters 60 wird auch der Anschluss an eine Druckquelle zu der Kolben/Zylindereinheit 30 bewerkstelligt; entsprechende Hydraulikschläuche werden oberhalb der Roboterzelle 62 auf einem Galgen 80 aufgehängt. Mittels des Roboters 60 wird auch der Hubbegrenzungsbolzen 56 in oder aus dem Eingriff mit der Schubstange 27 gebracht.

Noch bevor der Schieberschluss 20 geöffnet wird, wird vorzugsweise eine im Bereich des Behälterauslasses 14 eingebaute Messspule für die Ermittlung von Schlacke überprüft. Der Roboter 60 dockt eine Werkzeugplatte mit einem Gerät zur Prüfung der Messspule an und koppelt es auf einen pfannenseitigen Stecker. Die Steuerung 75 gibt dem Auswertegerät ein Startsignal, die Leitung- und Widerstandsprüfungen werden ausgeführt, und das vom Auswertegerät an die Steuerung zurück gemeldete Resultat wird auf dem Operatorpanel 89 visualisiert. Bei einem negativem Resultat muss die Messspule in der Werkstatt ausgewechselt werden.

Nachdem von der Steuerung 75 ein Signal zum Öffnen des Schiebeverschlusses abgegeben und der Gieskanal 14a geöffnet wurde, wird mit dem Roboter 60 eine Reinigung des Giesskanals 14a durchgeführt. Als Werkzeuge werden Sauerstofflanzen eingesetzt, mittels denen der Gieskanal 14a frei gebrannt wird. Der Roboter 60 fährt die Lanze immer tiefer in den Gieskanal 14a hinein. Ist der Roboter mit der Lanze ganz eingefahren, zieht er sie wieder aus dem Kanal. Bevor der Roboter 60 die jeweilige Sauerstofflanze im für diese vorgesehenen Werkzeugmagazin 66 wieder ablegt, wird an einer Lichtschranke die Länge der Lanze geprüft. Ist die Lanze kürzer als die Giesskanallänge, wirft der Roboter diese über einem Abfallbehälter ab und brennt den Gieskanal 14a mit einer neuen Lanze nochmals frei.

Um den Zustand der feuerfesten, allenfalls zu ersetzenden Komponenten zu überprüfen, wird der Roboter 60 in eine Homeposition gebracht und die Zutrittstür 76 entriegelt, worauf die Bedienungsperson die Roboterzelle 62 betreten und die Kontrolle in einer an sich bekannten Weise durchführen kann. Es wird der Zustand des Giesskanals, der Ausgusshülse 26 und der Schieberplatte 24 geprüft. Um den Zustand der Behälterauslasshülse 16 zu prüfen, müssen die Verschlussplatten 24, 23 ausgebaut werden, oder sie wird automatisch nach einer bestimmten Anzahl Durchgänge gewechselt.

Nach dieser Prüfung verlässt die Bedienungsperson die Roboterzelle 62, verriegelt die Zutrittstür 76 und gibt am Operatorpanel 89 das auszuführende Szenario ein, wonach der Roboter per Tastendruck gestartet wird. Dabei können folgende Szenarien ausgewählt werden:
Szenario 1: keine weitere Aktion
Szenario 2: Wechsel der Ausgusshülse 26 (Arbeitsschritte: Ausbau der alten Ausgusshülse 26, Einbau einer neuen Ausgusshülse 26)
Szenario 3: Wechsel der Ausgusshülse 26 und der Verschlussplatten 23, 24 (Arbeitsschritte: Ausbau der alten Ausgusshülse 26, Ausbau der alten Verschlussplatten 23, 24, Einbau von neuen Verschlussplatten 23, 24; Einbau einer neuen Ausgusshülse 26)
Szenario 4: Wechsel der Ausgusshülse 26, der Verschlussplatten 23, 24 und der Behälterauslasshülse 16 (Arbeitsschritte: Ausbau der alten Ausgusshülse 26, Ausbau der alten Verschlussplatten 23, 24, Ausreissen der Behälterauslasshülse 16, Einsetzen einer neuen Behälterauslasshülse 16, Einbau von neuen Verschlussplatten 23, 24; Einbau einer neuen Ausgusshülse 26)

Nach jedem dieser Szenarien wird der Schiebeverschluss 20 geschlossen und die Kolben/Zylindereinheit 30 demontiert.

Zusätzlich zu jedem dieser Szenarien kann mittels des Roboters 60 auch ein Wechsel eines an sich bekannten und aus der Zeichnung nicht ersichtlichen Spülkegels durchgeführt werden, der in unmittelbaren Nähe des Auslasses 14 im Behälter 10 eingebaut ist und zur Behandlung der Metallschmelze dient.

Auf einige Ersatzteile wie die Ausgusshülse 26, die ortsfeste Verschlussplatte 23, die Behälterauslasshülse 16, den Spülkegel, Keramikringe, Durchbruchsicherungen o.ä. muss vor dem Einbau Mörtel aufgebracht werden. Zu diesem Zweck ist an der erfindungsgemässen Anlage eine Mörtelstation 85 vorgesehen. Der Roboter 60 fährt mit diesen Ersatzteilen unter einer Mörtelsprühvorrichtung durch, wobei die mit Mörtel versehene Ersatzteile dann in einer Zwischenablage bis zum Einbau deponiert werden. Für diese Arbeiten kann auch die Zeit genutzt werden, in der sich keine Pfanne am Pfannenplatz befindet.

Die im Werkzeugmagazin 65 zur Verfügung stehenden Werkzeuge sind mit Vorteil jeweils mit einem Adapter 86 ausgerüstet, was deren Ergreifen durch den Roboter 60 vereinfacht.

Beim Wechsel der Ausgusshülse 26 wird mit einem entsprechenden Werkzeug ein Tragring derselben durch Verdrehen gelöst, die Ausgusshülse 26 auf einen Dorn aufgesteckt, über dem Abfallbehälter 71 ausgekippt und das Werkzeug mit dem Tragring abgelegt.

Beim Ausbau der Verschlussplatten 23, 24 wird mit einem entsprechenden Werkzeug der Hubbegrenzungsbolzen 56 entnommen und abgelegt und die Schiebereinheit 25 in der bereits beschriebenen Weise gelöst und um die Achse A ausgeschwenkt (aus Fig. 2 sind die vorhandenen Scharnierteile gut ersichtlich). Die Verschlussplatten 23, 24 werden nacheinander mit einem Dreibackengreifer im Giesskanalloch ergriffen, entnommen und in einem der Abfallbehälter 71, 72 entsorgt.

Für den Ausbau der Hülse 16 im Behälterauslass 14 koppelt der Roboter 60 ein hydraulisch betätigtes Werkzeug an, fährt mit seinen Backen durch den Giesskanal 14a, spreizt diese und zieht die Hülse 16 aus dem Lochstein 15 und entsorgt die Hülse 16 im Abfallbehälter. Notfalls muss die Hülse 16 mit einem Schlaghammer entfernt werden. Der Lochstein 15 wird mit einer Drahtbürste, einem Schlaghammer oder einem Fräser gereinigt und anschliessend mit Druckluft ausgeblasen.

Vor dem Einbau einer neuen Hülse 16 in den Behälterauslass 14 wird mittels des Roboters 60 eine Graphit-Masse in den Lochstein 15 eingetragen. Danach wird eine mit Mörtel versehene neue Hülse 16 eingesetzt. Der Roboter wartet eine Aushärtezeit von ca. 1 min ab. Der Mörtel wird von der Auflagefläche für die ortsfeste Verschlussplatte 23 mit Druckluft entfernt.

Für den Einbau von neuen Verschlussplatten 23, 24 wird der Kopf der Hülse 16 mit einer rotierenden Drahtbürste und anschliessend mit Druckluft gereinigt, wenn zuvor kein Hülsenwechsel vorgenommen wurde. Der Roboter 60 ergreift eine neue Schieberplatte 24 aus dem Ersatzteilmagazin 67 und legt sie in die aufgeklappte Schiebereinheit ein. Danach wird eine mit Mörtel versehene ortsfeste Verschlussplatte 23 eingelegt. Der Giesskanal wird mit Druckluft gereinigt. Nach dem Entnehmen eines Arretierstückes wird der Schiebeverschluss 20 geschlossen und die Schiebereinheit 25 in die Giessposition gebracht, wonach der Hubbegrenzungsbolzen 56 montiert wird.

Für den Einbau einer neuen der Ausgusshülse 26 reinigt der Roboter 60 zuerst eine entsprechende Auflage auf der Schieberplatte 24, sofern diese zuvor nicht ausgewechselt wurde. Anschliessend wird die Graphit-Masse auf die Auflage aufgesprüht. Dann wird eine mit Mörtel versehene neue Ausgusshülse 26 sowie der Tragring eingesetzt und der Tragring angezogen. Der Giesskanal 14a wird mit Druckluft von Mörtel gereinigt.

Nach dem Schliessen des Schiebeverschlusses 20 bzw. des Giesskanals 14a und dem Entkoppeln und Ablegen der Kolben/Zylindereinheit 30 wird der Hitzeschild 79 geschlossen.

## Patentansprüche

1. Anlage zur Wartung eines am Ausguss eines Behälters (10) für Metallschmelze montierten Schiebeverschlusses (20), mit mindestens einem Werkzeugmagazin (65, 66), mit mindestens einem Ersatzteilmagazin (67) sowie mit Mitteln (30) zum Öffnen und Schliessen des Schiebeverschlusses (20), **dadurch gekennzeichnet, dass**
ein mit einem automatischen Greifwechselsystem (61) versehener und mit einer Steuerung (75) wirkverbundener Roboter (60) vorhanden ist, der im Stande ist, die exakte Position des Behälters (10) bzw. des Schiebeverschlusses (20) selbsttätig zu erkennen, die Mittel (30) zum Öffnen und Schliessen des Schiebeverschlusses (20) zu betätigen, und je nach Zustand der einzelnen allenfalls zu ersetzenden Komponenten aus den ihn umgebenden Magazinen (65, 66, 67) Werkzeuge bzw. Ersatzteile zu ergreifen und Reinigungsarbeiten, Komponentenausbau sowie deren Ersatz oder Wiedereinbau durchzuführen.

2. Anlage nach Anspruch 1, **dadurch gekennzeichnet, dass** der Roboter (60) mit den ihn umgebenden Magazinen (65, 66, 67) innerhalb einer durch Schutzabschrankungen (63) begrenzten Roboterzelle (62) angeordnet ist, wobei die mit dem Roboter (60) wirkverbundene Steuerung (75) mit einem Operatorpanel (89) ausserhalb der Roboterzelle (62) angeordnet sind.

3. Anlage nach Anspruch 1 oder 2, **dadurch gekennzeichnet, dass** die je nach Zustand allenfalls zu ersetzenden Komponenten eine feuerfeste Ausgusshülse (26) des Schiebeverschlusses (20), seine feuerfesten Verschlussplatten (23, 24) sowie eine feuerfeste Hülse (16) im Auslass (14) des Behälters (10) umfassen.

4. Anlage nach Anspruch 3, **dadurch gekennzeichnet, dass** zusätzlich auch ein in unmittelbaren Nähe des Auslasses (14) im Behälter (10) eingebauter Spülkegel mittels des Roboters (60) auswechselbar ist.

5. Anlage nach einem der Ansprüche 1 bis 4, **dadurch gekennzeichnet, dass** zur selbsttätigen Erkennung bzw. Kalibrierung der Behälter- bzw. Schiebeverschlussposition eine Kamera an das automatische Greifwechselsystem (61) koppelbar ist.

6. Anlage nach einem der Ansprüche 1 bis 5, **dadurch gekennzeichnet, dass** die Mittel zum Öffnen und Schliessen des Schiebeverschlusses (20) eine Kolben/Zylindereinheit (30) umfassen, die mittels des Roboters (60) von einer Ablage (70) zum Schiebeverschluss (20) bringbar, am Schiebeverschluss (20) montierbar und an eine Druckquelle anschliessbar ist.

7. Anlage nach Anspruch 6, **dadurch gekennzeichnet, dass** zur Hubbegrenzung einer von der Kolben/Zylindereinheit (30) betätigbaren und einen Giesskanal (14a) öffnenden oder verschliessenden Schiebereinheit (25) ein Hubbegrenzungsbolzen (56) vorgesehen ist, der zwecks Ausbau der Verschlussplatten (23, 24) mittels des Roboters (60) entnehmbar ist und somit die Schiebereinheit (25) von einem Schiebergehäuse (21, 22) lösbar bzw. diesem gegenüber verschwenkbar ist.

8. Anlage nach einem der Ansprüche 1 bis 7, **dadurch gekennzeichnet, dass** zur Giesskanalreinigung mittels des Roboters (60) Sauerstofflanzen vom Werkzeugmagazin (66) entnehmbar und in den Giesskanal (14a) einführbar sind, wobei die jeweilige Lanze nach einer Prüfung ihrer Länge entweder zurück zum Werkzeugmagazin (66) oder einem Abfallbehälter zuführbar ist.

9. Anlage nach einem der Ansprüche 1 bis 8, **dadurch gekennzeichnet, dass** Ersatzteile, wie Ausgusshülsen (26) und ortsfeste Verschlussplatten (23) des Schiebeverschlusses (20), Hülsen (16) für den Behälterauslass (14), Spülkegel, Durchbruchsicherungen oder Keramikringe zum Aufbringen von Mörtel mittels des Roboters (60) durch eine Mörtelstation einer Zwischenablage zuführbar sind.

10. Anlage nach einem der Ansprüche 1 bis 9, **dadurch gekennzeichnet, dass** mittels des Roboters (60) ein Gerät zur Prüfung einer im Bereich des Behälterauslass (14) eingebauten Messspule für die Ermittlung von Schlacke auf einen behälterseitigen Stecker anschliessbar ist, wobei die Steuerung (75) ein Startsignal an ein Auswertegerät der Messspule liefert und von diesem ein Resultat empfängt.

11. Anlage nach einem der Ansprüche 2 bis 10, **dadurch gekennzeichnet, dass** zur Prüfung des Komponentenzustandes die Roboterzelle (62) über eine während des Robotereinsatzes verriegelbare Tür (76) betretbar ist, wobei das auszuführende Szenario des Komponenten-Ausbaus und - Einbaus durch die Bedienungsperson nach der erneuten Türverriegelung am Operatorpanel (89) eingegeben und der ausgewählte, vorprogrammierte Arbeitsvorgang gestartet wird.
